# EUROPÄISCHE PATENTSCHRIFT

(11) **EP 3 560 861 B1**
(45) Veröffentlichungstag und Bekanntmachung des Hinweises auf die Patenterteilung: **05.07.2023**
(21) Anmeldenummer: 19180397.2
(22) Anmeldetag: 15.05.2015
(51) Int. Cl.: B65G 17/00, B65G 35/06, B65G 19/02

(54) **UMLAUFFÖRDERER**
CIRCULATING CONVEYOR
CONVOYEUR CONTINU

(30) Priorität: 16.05.2014 DE 102014106956
(43) Veröffentlichungstag der Anmeldung: 30.10.2019
(62) Teilanmeldung aus: 15726029.0
(73) Patentinhaber: Bleichert Automation Gmbh&Co. KG, 74706 Osterburken (DE)
(72) Erfinder: Schirle, Anton, 74597 Stimpfach (DE); Graaf, Wolfgang, 74706 Osterburken (DE)
(74) Vertreter: Canzler & Bergmeier Patentanwälte Partnerschaft mbB

(56) Entgegenhaltungen:
- EP-A1- 0 256 926
- EP-A1- 0 531 610
- EP-A1- 2 189 397
- DE-A1- 2 712 214
- DE-U1-202011 108 531
- FR-A1- 2 626 858
- US-A- 4 934 515
- US-A- 5 873 452

## Beschreibung

Die Erfindung betrifft einen Umlaufförderer nach dem Oberbegriff des Anspruchs 1.

Derartige Umlaufförderer sind seit Langem bekannt. Im Obertrum werden auf den umlaufenden Paletten - auch Werkstückträger genannt - aufgesetzte Werkstücke von einem Ort zu einem anderen transportiert. Bei den Werkstücken handelt es sich beispielsweise um Montageteile für die Kraftfahrproduktion, die mittels Paletten zu einem Montageband transportiert werden. Am Montageband angekommen, werden die Werkstücke z.B. von einem Roboter abgenommen und von Produktionsmaschinen verarbeitet. Generell sind derartige Umlaufförderer an den verschiedensten Stellen und für die unterschiedlichsten Einsätze vorgesehen.

Die Zugelemente sind häufig als endlose Transportketten ausgebildet, die in den beiden Seitenabschnitten des Umlaufförderers umlaufen. Sie werden von motorisch angetriebenen Kettenrädern, die in den beiden Umkehrabschnitten angeordnet sind, angetrieben. Bei einem bekannten Umlaufförderer, der in der WO 2004/000698 A1 beschrieben ist, ist an jeder Seite einer Palette ein mit einer Hysteresekupplung oder Viskosekupplung gekoppeltes Zahnrad vorhanden. Die beiden Zahnräder greifen in die jeweilige Transportkette in dem entsprechenden Seitenabschnitt ein. Das Zahnrad dreht sich bei ungehindertem Transport der Palette nicht, sondern wirkt wie ein starrer Zapfen, der die Palette mitnimmt. Erst wenn ein Hindernis der Weiterfahrt entgegensteht, insbesondere eine wartende Palette, drehen die beiden Zahnräder in der kontinuierlich weiter angetriebenen Transportkette auf der Stelle, solange bis der Widerstand durch die vorausfahrende Palette nicht mehr besteht. Damit die Palette mittels der Zahnräder auch in Umkehrabschnitten angetrieben werden kann, sind die Transportketten bei dieser bekannten Vorrichtung jeweils zweireihig bzw. zweizügig (oder auch dreizügig) ausgebildet, wobei diese beiden Reihen jeweils starr miteinander gekoppelt sind. Beide Transportketten werden jeweils mit einem Kettenrad angetrieben, wobei dieses Kettenrad allerdings nur in ein bzw. - bei dreizügiger Ausbildung - zwei Stränge der Kette eingreift, so dass ein Kettenstrang frei bleibt. In diesem Kettenstrang läuft dann das jeweilige, mit der Hysterese- oder Viskosekopplung verbundene Zahnrad der Palette ab, so dass dieses ständig im Eingriff mit dieser Transportkettenreihe steht.

Die bekannte Palette weist des Weiteren an ihrer Unterseite in allen vier Ecken jeweils eine Laufrolle bzw. ein Laufrad auf, wobei diese Rollen in oder an Schienen entlang der beiden Trums laufen, welche die Laufrollen zwangsführen und somit die Palette sichern. Zudem ist eine Klinke unterhalb jeder Palette befestigt, welche gegenüber einem der besagten Zahnkränze angeordnet ist. Diese Klinke bildet im Umkehrabschnitt einen Formschluss mit der Kette, wodurch eine sichere Fahrt der Palette im Umkehrabschnitt gewährleistet wird. Allerdings ist bei dieser Konstruktion ein einfaches Abheben der Palette seitens eines Bedieners nicht möglich.

Es sind aus dem Stand der Technik weitere Konstruktionen bekannt, welche Lösungen für die Umlenkung der Paletten in den Umkehrabschnitten vom Obertrum zum Untertrum beschreiben. Bei bekannten Ausgestaltungen ist hierfür eine beispielsweise Synchronisation von an der Palette angeordneten Eingriffsmitteln und entsprechend ausgebildeten Mitnahmemitteln an den Zugelementen erforderlich, deren Antrieb durch Signale von Lichtschranken gesteuert wird. Bevorzugt ist jedoch eine Umlenkung ohne eine Unterbrechung der Fahrt der Palette. Eine diesbezügliche Lösung zeigt beispielsweise die DE 10 2009 056 545 A1, in der eine Ausführung mit einem Planetenradgetriebe beschrieben ist. Derartige Konstruktionen sind jedoch relativ aufwändig.

Aus der EP 2 189 397 A1 ist ein geschlossener Umlaufförderer bekannt, welcher als nächstkommender Stand der Technik die Merkmale des Oberbegriffs des Anspruchs 1 aufweist. Dieser bekannte Umlaufförderer weist in den Umlenkabschnitten um feststehende Achsen rotierende Scheiben auf, die aus einem elastisch deformierbaren Material bestehen. Die Scheiben weisen hierbei eine gleichmäßige, kreisförmig gekrümmte Umfangsfläche auf, die in den Umkehrabschnitten in Reibschluss mit korrespondierenden Gummipuffern kommen, welche an der Unterseite von Paletten vorgesehen sind.

Es ist die Aufgabe der vorliegenden Erfindung, eine sichere und kostengünstige Lösung für die Umlenkung einer Palette zur Übergabe vom Ober- zum Untertrum und umgekehrt zur Verfügung zu stellen.

Diese Aufgabe wird durch die Merkmale des Anspruchs 1 gelöst.

Gemäß der Erfindung ist an der Unterseite der Palette mindestens ein erstes Form- oder Reibschlusselement fixiert, welches beim Einfahren in einen jeweiligen Umkehrabschnitt in einen form- oder reibschlüssigen Eingriff mit mindestens einem dort jeweils angeordneten zweiten Form- oder Reibschlusselement kommt, das in dem mindestens einen Umkehrabschnitt rotiert und die Palette über Form- oder Reibschluss mitnimmt. Dieser Form- oder Reibschluss wird beim Herausfahren aus dem Umkehrabschnitt wieder aufgehoben. Durch die Fixierung an der Palette bewegt sich das erste Form- oder Reibschlusselement zusammen mit der Palette in dem mindestens einen Umkehrabschnitt, rotiert also nicht um sich selbst. Gemäß der Erfindung ist zumindest das erste Form- oder Reibschlusselement elastisch nachgiebig ausgebildet. Hierzu weist zumindest das erste Form- oder Reibschlusselement mindestens ein elastisches Pufferbauteil auf. Wenn die beiden Form-oder Reibschlusselemente aufeinander treffen, gibt zumindest das erste Form- oder Reibschlusselement nach. Durch das elastische Nachgeben wird zumindest das erste der beiden Form- oder Reibschlusselemente vom anderen weggedrückt und weicht geringfügig aus, um sich anschließend eng an das zweite Form- oder Reibschlusselement - unter einem Gegendruck, der beispielsweise von zwangsgeführten Rollen der Palette erzeugt wird - anzulegen. Hierdurch wird ein starker Form- oder Reibschluss zwischen den beiden Form- oder Reibschlusselementen ermöglicht. Je nach geometrischer Ausgestaltung der Form- oder Reibschlusselemente kann auch anfangs, d.h. beim anfänglichen Ineinandergreifen der beiden Form- oder Reibschlusselemente, eine Relativbewegung dieser Elemente zueinander in Umlaufrichtung der Palette durch das elastische Nachgeben entstehen, so dass insbesondere das erste Form- oder Reibschlusselement und damit auch die Palette in seine endgültige Position rutschen kann, um den erwünschten Form- oder Reibschluss zu erzielen. Wenn es also zu einer Kollision zwischen der vorderen Kante des ersten Form- oder Reibschlusselements mit dem zweiten Form- oder Reibschlusselement kommt, wird eine Zwangsverklemmung mittels des elastischen Bauteils und damit eine mechanische Beschädigung der beteiligten Teile vermieden. Eine Synchronisation der Palettenbewegung mit den Zugelementen ist nicht mehr notwendig.

Zudem bietet die Erfindung den Vorteil, dass eine Palette vom Obertrum abgehoben werden kann, da keine von innen gegen ein Zugelement (beispielsweise Transportkette) gerichtete Klinke o.ä. (s.o.) vorhanden sein muss, um die Palette sicher im Umkehrabschnitt zu halten.

Erfindungsgemäß ist mindestens ein elastisches Pufferbauteil am ersten Form- oder Reibschlusselement vorgesehen und hierbei zwischen der Unterseite der Palette und einem starren Bauteil des ersten Form- oder Reibschlusselements angeordnet. Bei dieser Ausgestaltung kommt das starre Bauteil in dem mindestens einen Umkehrabschnitt mit dem zweiten Form- oder Reibschlusselement in Kontakt und gibt aufgrund der Pufferung durch das mindestens eine elastische Pufferbauteil bei diesem Aufeinandertreffen nach.

Bei einer dementsprechend ersten Alternative der Erfindung sind mindestens zwei elastische Pufferbauteile an der Unterseite der Palette vorgesehen, wobei ein erstes elastisches Pufferbauteil an der in Umlaufrichtung gesehen Vorderseite der Palette und ein zweites elastisches Pufferbauteil an der in Umlaufrichtung gesehen Rückseite der Palette vorhanden ist. Hierdurch kann sich eine Art Wippbewegung des ersten Form- oder Reibschlusselements ergeben, wenn es gegen das zweite Form- oder Reibschlusselement anläuft, ggf. nach oben weggedrückt wird und beim weiteren Vorlauf der Palette und ggf. dann erst erfolgendem Formschluss (bspw. durch formschlüssiges Ineinanderrutschen von Zähnen beider Form- oder Reibschlusselemente) zurückwippt. Es kann hierdurch eine hervorragende Anpassung der beiden Form- oder Reibschlusselemente zueinander in dem mindestens einen Umkehrabschnitt realisiert werden.

Bei einer zweiten Alternative der Erfindung ist ein besagtes elastisches Pufferbauteil an der in Umlaufrichtung gesehen Vorderseite der Palette vorgesehen. Das erste Form- oder Reibschlusselement wird beim Kontaktieren mit dem zweiten Form- oder Reibschlusselement um eine in Bezug auf die Palette fixe Drehachse ausgelenkt, die an der in Umlaufrichtung gesehen Rückseite der Palette vorgesehen ist.

In dem mindestens einen Umkehrabschnitt sind besonders bevorzugt Kulissen vorgesehen, in denen an der Palette angeordnete Führungselemente, insbesondere Rollen, zwangsgeführt sind. Im Falle von Rollen laufen diese an der Innenseite der Kulisse derart, dass die Palette und damit das erste Form- oder Reichschlusselement gegen das um die feste Drehachse rotierende zweite Form- oder Reibschlusselement drückt, wodurch der besagte Form- oder Reibschluss realisiert wird.

Das erste Form- oder Reibschlusselement dreht besonders bevorzugt synchron mit den Umlenkelementen und wird vorzugsweise ebenfalls vom besagten Motor angetrieben. Es bietet sich hierbei an, das erste Form- oder Reibschlusselement auf derselben Achse anzuordnen, auf welcher auch die Umlenkelemente gelagert sind. Diese Konstruktion ist einfach zu realisieren und kostengünstig. Sie bewirkt zudem, dass das zweite Form- oder Reibschlusselement die Palette - im Zusammenspiel mit der die Gegenkraft aufbringenden Schienen, in denen die Rollen der Palette laufen - im Umkehrabschnitt zu führen vermag. Andere Transportelemente, beispielsweise die wie oben beschrieben in Transportketten eingreifenden und für den Vortrieb im Ober- und Untertrum sorgenden Zahnräder an der Palette, können hierbei ebenfalls weiter mit den Zugelementen, insbesondere Transportketten, in Eingriff stehen, sind aber vorzugsweise nicht am Transport der Palette im Umkehrabschnitt beteiligt.

Besonders bevorzugt ist das zweite Form- oder Reibschlusselement scheiben- oder radförmig ausgebildet ist, während sich das erste Form- oder Reibschlusselement über einen Winkelbereich von mehr als 20°, vorzugsweise von mehr als 35° und besonders bevorzugt von mehr als 50°, beispielsweise mehr als 60° und beispielsweise über einen Winkelbereich von ca. 70°, erstreckt und sich die beiden Form- oder Reibschlusselemente in dem mindestens einen Umkehrabschnitt in diesem Winkelbereich im form- oder reibschlüssigen Eingriff befinden. Diese große Winkelüberdeckung wird durch das mindestens eine elastische Pufferbauteil ermöglicht, welches beim Aufeinandertreffen der beiden Form- oder Reibschlusselemente nachgibt und sich somit eine große Kontaktfläche zwischen diesen realisieren lässt, die sich nach dem Überschreiten des Scheitelpunkts seitens des ersten Form- oder Reibschlusselements beim weiteren Einfahren der Palette in den jeweiligen Umkehrabschnitt ständig vergrößert.

Das erste Form- oder Reibschlusselement weist mit dem zweiten Form- oder Reibschlusselement vorzugsweise eine größere Berührungsstrecke in Umlaufrichtung auf als in Querrichtung hierzu. Mit anderen Worten ist bei dieser Ausführungsform die wirksame Kontaktlänge (in Umfangrichtung gesehen) größer als die Kontaktbreite. Es entsteht hierbei eine sichere form- oder reibschlüssige Führung der Palette über eine lange Strecke im Umkehrabschnitt.

Gemäß einer besonders bevorzugten Ausgestaltung weist das erste Form-oder Reibschlusselement eine zum zweiten Form- oder Reibschlusselement gewandte konkave, sich in Umlaufrichtung der Palette erstreckenden Hüllkurve auf. Ebenfalls bevorzugt weist das zweite Form- oder Reibschlusselement eine konvexe Hüllkurve auf, welche vorzugsweise korrespondierend zur konkaven Hüllkurve des ersten Form- oder Reibschlusselements ausgebildet ist. Die konkave Hüllkurve des ersten Form- oder Reibschlusselements erstreckt sich bevorzugt über den bzw. die oben genannten Winkelbereiche. Bei einem Reibschluss kommen die beiden Form- oder Reibschlusselemente bei dieser Ausgestaltung in den Umkehrabschnitten an diesen Hüllkurven in reibschlüssigen Eingriff. Der Reibschluss kann entweder über die gesamte Hüllkurve erfolgen oder nur - bei nicht gleichmäßiger Ausgestaltung der Reibschlussflächen - in bestimmten Bereichen, welche mit der Hüllkurve zusammenfallen, während andere Bereiche außerhalb der Hüllkurve liegen und nicht in Reibschluss geraten.

Ein konkaver Verlauf des ersten Form- oder Reibschlusselements und ein konvexer Verlauf des zweiten Form- oder Reibschlusselements ermöglichen, dass die Palette in einfacher Weise vom Obertrum abgenommen werden kann.

Das erste Form- oder Reibschlusselement umfasst vorzugsweise mindestens ein Zahnsegment mit drei oder mehr Zähnen, beispielsweise fünf oder sieben oder neun oder noch mehr Zähne, wie z.B. zehn Zähne, die sich in dem mindestens einen Umkehrabschnitt vorzugsweise formschlüssig an das zweite Form- oder Reibschlusselement anlegen. Hierzu ist das zweite Form- oder Reibschlusselement zweckmäßigerweise als Zahnrad ausgebildet. Die oben genannte konkave Hüllkurve ist in diesem Fall durch die Kuppen der Zähne des ersten Form- oder Reibschlusselements definiert. Da auf eine Synchronisation von erstem und zweitem Form- und Reibschlusselement verzichtet werden kann, sind verschiedene Szenarien des Ineinandergreifens der Zähne des ersten mit den Zähnen des zweiten Form-oder Reibschlusselements möglich. Beispielsweise kann der vorderste Zahn des ersten Form- oder Reibschlusselements mit dem Zahnrad (d.h. dem zweiten Form- oder Reibschlusselement) kollidieren und beispielsweise - da erfindungsgemäß zumindest ein elastisches Bauteil an dem ersten Form- oder Reibschlusselement ausgebildet ist - bewirken, dass das elastische Bauteil bei einer Fahrt vom Obertrum zum Untertrum nach oben ausweicht und anschließend die Palette in Umfangsrichtung nach vorne oder hinten rutscht, bis die Zähne vom ersten und zweiten Form- oder Reibschlusselement passend ineinandergreifen und der endgültige Formschluss hergestellt ist. Dieser Formschluss kann aber auch schon ganz zu Anfang bei einem passgenauen Einfahren der Palette in den Umkehrabschnitt entstehen, wobei auch hier beim weiteren Vorfahren der Palette mehr und mehr Zahnpaare ineinander gleiten. Mit fortschreitender Fahrt und damit Drehbewegung der Palette wird hierbei der Formschluss mit den folgenden Zähnen der beiden Form- oder Reibschlusselemente gebildet, bis alle Zähne des ersten Form- oder Reibschlusselement im Eingriff mit dem zweiten Form- oder Reibschlusselement sind.

Gemäß einer Alternative umfasst das erste Form- oder Reibschlusselement eine im Wesentlichen gleichmäßig konkave Reibschlussfläche, besitzt also keine Zahnung, sondern eine konkave Fläche mit gleichbleibendem Radius. Die oben genannte konkave Hüllkurve fällt hierbei mit dieser konkaven Reibschlussfläche zusammen. Diese legt sich dann im Umkehrabschnitt reibschlüssig an das zweite Form- oder Reibschlusselement an, welches vorzugsweise korrespondierend zur konkaven Reibschlussfläche des ersten Form- oder Reibschlusselements eine gleichmäßig konvexe Reibschlussfläche aufweist. Die konkave und die konvexe Hüllkurven verlaufen hierbei bevorzugt konzentrisch um eine Achse, um welche das zweite Form- oder Reibschlusselement rotiert. Hierdurch ist - begünstigt auch durch die Nachgiebigkeit des elastischen Bauteils - ein vollflächiger Reibschluss zwischen beiden Form- oder Reibschlusselementen möglich. Die gemeinsame Reibschlussfläche wächst hierbei bei der stetigen Vorwärtsbewegung der Palette in den Umkehrabschnitt, bis sie maximal ist. Der Gegendruck, der die Palette gegen das zweite Form- oder Reibschlusselement drückt, wird bevorzugt durch die Rollen der Palette bewirkt, die ihrerseits im Umkehrabschnitt zwangsgeführt sind.

Das erste Form- oder Reibschlusselement kann gemäß einer Alternative im Falle der Bildung eines Reibschlusses auch wellig oder zahnförmig ausgebildet sein, wodurch sich auch im Falle eines reinen Reibschlusses kein durchgehender Flächenkontakt zwischen den beiden Form- oder Reibschlusselementen einstellt. Gemäß einer Alternative weist das erste Form- oder Reibschlusselement eine gleichmäßig konkave Reibschlussfläche auf, die sich reibschlüssig an die Zahnkuppen eines Zahnrads als zweitem Form- oder Reibschlusselement anlegen.

Gemäß einer weiteren Alternative weist das erste Form- oder Reibschlusselement eine Teilverzahnung auf, umfasst also insbesondere zwei oder mehrere Zähne sowie eine insbesondere konkave Fläche. Korrespondierend hierzu kann das zweite Form- oder Reibschlusselement korrespondierende Gegenflächen aufweisen. Insgesamt resultiert eine Kraftübertragung, die auf einem Formschluss basiert.

Gemäß einer besonders bevorzugten Ausführungsform umfasst das zweite Form- oder Reibschlusselement ein Zahnrad, auf das eine endlose Kette gespannt ist. Mit diesem Zahnrad und der endlosen Kette kommt dann das erste Form- oder Reibschlusselement in form- oder reibschlüssigen Kontakt. Die besagte auf das Zahnrad gespannte Kette, vorzugsweise ähnlich oder sogar identisch zu einer handelsüblichen Fahrradkette, stellt ein sehr kostengünstiges Verschleißelement dar und kann weite Teile der Kräfteaufnahme und damit auch des Abriebs übernehmen.

Bei einem besagten Formschluss greifen Zähne des ersten Form- oder Reibschlusselements, vorzugsweise drei oder mehr Zähne, die bevorzugt eine konkave Hüllkurve ausbilden und sich über den bzw. die oben genannten Winkelbereiche erstrecken, formschlüssig in die von den Gliedern der gespannten Kette gebildeten Zwischenräume ein. Hierbei ist es besonders bevorzugt, dass die Zähne des ersten und zweiten Form- oder Reibschlusselements nicht miteinander in Berührung kommen. Mit anderen Worten liegen die Zähne des ersten Form- oder Reibschlusselements ausschließlich an den Kettengliedern der gespannten Kette an. Die Zähne des ersten und zweiten Form- und Reibschlusselements sind hierzu vorteilhafterweise abgeflacht ausgebildet. Die Abriebsbelastung liegt hierbei im Wesentlichen auf den Kettengliedern, die - wie oben gesagt - bei Bedarf in einfachster Weise ausgetauscht werden kann.

Bei einem besagten Reibschluss liegen die Reibflächen des ersten Form- oder Reibschlusselements auf den Kettengliedern, die über die Zahnkuppen des Zahnrads herausragen. Auch hierbei ist bei zu großem Verschleiß lediglich die Kette zu ersetzen.

Selbstverständlich können auch beispielsweise zwei oder mehr nebeneinander angeordnete Zahnräder vorgesehen sein, die quer zur Transportrichtung gesehen angeordnet sind und mit einem - entsprechend breiten - oder mehreren ersten Formschlusselementen in Eingriff kommen.

Das zweite Form- oder Reibschlusselement umfasst besonders bevorzugt ein Zahnrad, das mindestens einen elastischen, vorzugsweise vollständig umlaufenden, gezahnten Außenumfangsabschnitt als weiteres elastisches Pufferbauteil aufweist. Wenn das erste Form- oder Reibschlusselement in Kontakt mit diesem weiteren elastischen Pufferbauteil kommt, gibt letzteres nach und übt gleichzeitig einen Druck gegen das erste Form- oder Reibschlusselement aus, welches den Form- oder Reibschluss fördert. Ist bei einem dergestalt ausgebildeten Zahnrad eine Kette gespannt (s.o.), wird diese Kette bei Auftreffen des ersten Form- oder Reibschlusselements in das weitere elastische Pufferbauteil gedrückt. Wenn das erste Form- oder Reibschlusselement ein konkav verlaufendes Zahnsegment aufweist (s.o.), findet besonders bevorzugt keine Berührung der Zähne dieses Zahnsegments mit den Zähnen des Zahnrads statt, und zwar weder beim anfänglichen Ineinandergreifen noch beim vollständig hergestellten Formschluss.

Gemäß einer vorteilhaften Ausführungsform umfasst das zweite Form- oder Reibschlusselement ein Zahnrad, das eine starre Scheibe, vorzugsweise aus Metall, umfasst, auf dessen Umfangsrand ein Zahnkranz aus einem elastischen Material, bevorzugt aus einem Polyester-Urethan-Kautschuk, aufgebracht ist. Ein entsprechender Kautschuk ist unter dem Namen Vulkollan^{®} bekannt. Diese Ausführung hat den Vorteil, dass der überwiegende Teil des zweiten Form- oder Reibschlusselements aus Stahl gefertigt werden kann und nur am Außenumfang der Kautschuk bzw. allgemein das elastische Material in Zahnform ausgebildet sein muss. Ein Austausch dieses Zahnrings, der beispielsweise eine radiale Ausdehnung von ca. 10 mm bis zu seinen Zahnkuppen hat, nach dessen Verschleiß ist ohne weiteres möglich. Die Scheibe kann hierbei beispielsweise einen glatten Umfangsrand oder eine umlaufende Befestigungsnut oder gezahnt ausgebildet sein, wobei bei all diesen Ausführungsformen umfangseitig das elastische Material aufgebracht ist. Ist eine Kette auf den Zahnkranz gespannt und weist das erste Form- oder Reibschlusselement mindestens ein wie oben beschriebenes Zahnsegment auf, berühren sich die Zähne des ersten und des zweiten Form- oder Reibschlusselements bevorzugt nicht.

Allgemein ist es bevorzugt, dass das Material des mindestens einen elastischen Pufferbauteils ein elastischer Kunststoff ist, beispielsweise basierend auf Kautschuk oder einem Material mit vergleichbaren elastischen Eigenschaften.

Vorzugsweise ist das zweite Form- oder Reibschlusselement zwischen den Umlenkelementen in einem Umkehrabschnitt angeordnet, vorteilhafterweise mittig zwischen diesen Umlenkelementen. An dieser Stelle ist es leicht zugänglich, da zwischen den Umlenkelementen relativ viel Freiraum vorliegt. Außerdem kann durch die mittige Anordnung verhindert werden, dass die Palette verkantet, sondern vielmehr gleichmäßig im Umkehrabschnitt umgelenkt wird.

Bei allen beschriebenen Ausführungsformen ist es für die Aufbringung eines Gegendrucks für die Realisierung des Form- oder Reibschlusses von Vorteil, wenn in den Umkehrabschnitten beidseitig jeweils eine vorzugsweise halbkreisförmige Kulisse vorgesehen ist, an der die Rollen der Palette entlang laufen. Hierdurch wird eine einfache und effiziente Führung der Palettenrollen bzw. Palettenräder in den Umkehrabschnitten gewährleistet, welche für den Gegendruck der Palette gegen das zweite Form- oder Reibschlusselement sorgt. Die eigentliche Mitnahme der Palette wird durch das angetriebene zweite Form- oder Reibschlusselement aufgrund des Form- oder Reibschlusses zwischen den beiden Form- oder Reibschlusselements realisiert.

Die Zugelemente sind vorzugsweise als Antriebsketten und die Umlenkelemente als Kettenräder ausgebildet.

Im Folgenden wird die Erfindung anhand von Figuren näher erläutert. Gleiche Bezugszeichen stehen für gleiche oder gleichwirkende Bauteile. Es zeigen:
- **Fig. 1**: eine perspektivische Teilansicht eines Umlaufförderers mit einem Umkehrabschnitt;
- **Fig. 2**: eine perspektivische Ansicht eines Umkehrabschnitts mit einer transparent dargestellten Palette;
- **Fig. 3**: eine seitliche Schnittansicht durch einen Umkehrabschnitt mit einer Palette und einem ersten Form- oder Reibschlusselement gemäß einer ersten Ausführungsform (Schnitt entlang A-A in Fig. 2);
- **Fig. 4**: eine perspektivische Unteransicht der Palette der Fig. 3;
- **Fig. 5**: eine seitliche Schnittansicht der Palette der Fig. 3 und 4 (Schnitt entlang B-B in Fig. 4).
- **Fig. 6**: eine seitliche Schnittansicht durch einen Umkehrabschnitt mit einer Palette und einem ersten Form- oder Reibschlusselement gemäß einer zweiten Ausführungsform;
- **Fig. 7**: eine perspektivische Unteransicht der Palette der Fig. 6;
- **Fig. 8**: eine seitliche Schnittansicht der Palette der Fig. 5 und 6.
- **Fig. 9**: eine seitliche Schnittansicht durch einen Umkehrabschnitt mit einer Palette und einem ersten Form- oder Reibschlusselement gemäß einer dritten, nicht erfindungsgemäßen Ausführungsform;
- **Fig. 10**: eine perspektivische Unteransicht der Palette der Fig. 9;
- **Fig. 11**: eine seitliche Schnittansicht der Palette der Fig. 9 und 10.
- **Fig. 12**: eine seitliche Schnittansicht durch einen Umkehrabschnitt mit einer Palette und einem ersten Form- oder Reibschlusselement gemäß einer vierten Ausführungsform;
- **Fig. 13**: eine perspektivische Unteransicht der Palette der Fig. 12, und
- **Fig. 14**: eine seitliche Schnittansicht der Palette der Fig. 12 und 13.

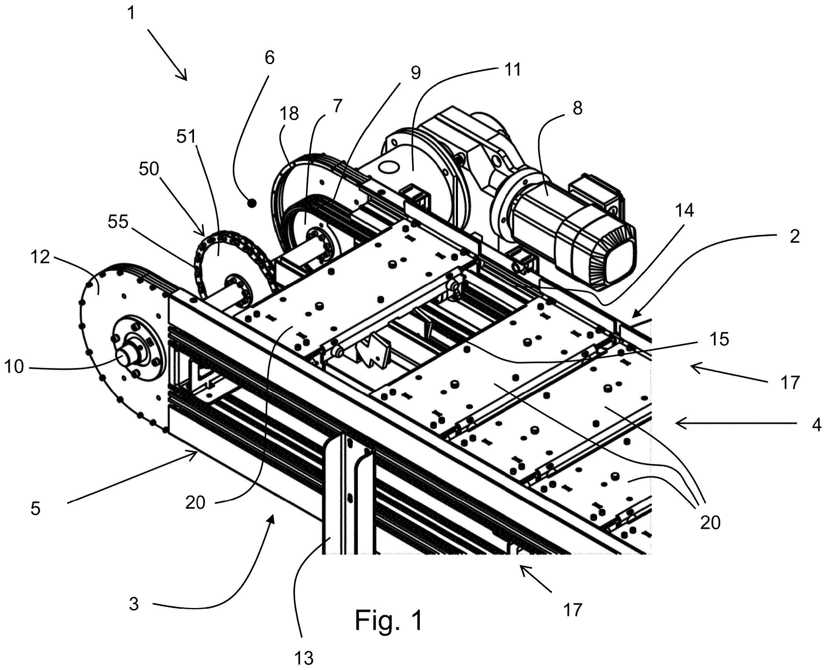

In der Fig. 1 ist in perspektivischer Sicht von oben ein Umlaufförderer 1 mit einem Obertrum 2 und einem Untertrum 3 wiedergegeben, die zusammen eine obere Förderbahn 4 und eine untere Förderbahn 5 für hintereinander laufende Paletten 20 bilden. Der Obertrum 2 und der Untertrum 3 sind an ihren beiden Stirnseiten über jeweils im Wesentlichen halbkreisförmige Umkehrabschnitte 6 verbunden. Im Obertrum 2 und Untertrum 3 laufen jeweils zwei parallel zueinander angeordnete Laufschienen 14 bzw. 15. Jeweils eine Laufschiene 14 des Obertrums 2 verläuft hierbei über eine Laufschiene 15 des Untertrums 3, wobei ein solches Paar Laufschienen 14, 15 mittels Streben eines Gestells 13 verbunden ist. Jeweils eine Laufschiene 14 des Obertrums 2 ist mit einer Laufschiene 15 des Untertrums 3 durch jeweils eine in den Umkehrabschnitten 6 angeordnete Kulisse 18 verbunden. Der Umlaufförderer 1 weist somit zwei Seitenabschnitte 17 auf, in denen jeweils ein endloser Umlauf der Paletten 20 realisiert wird.

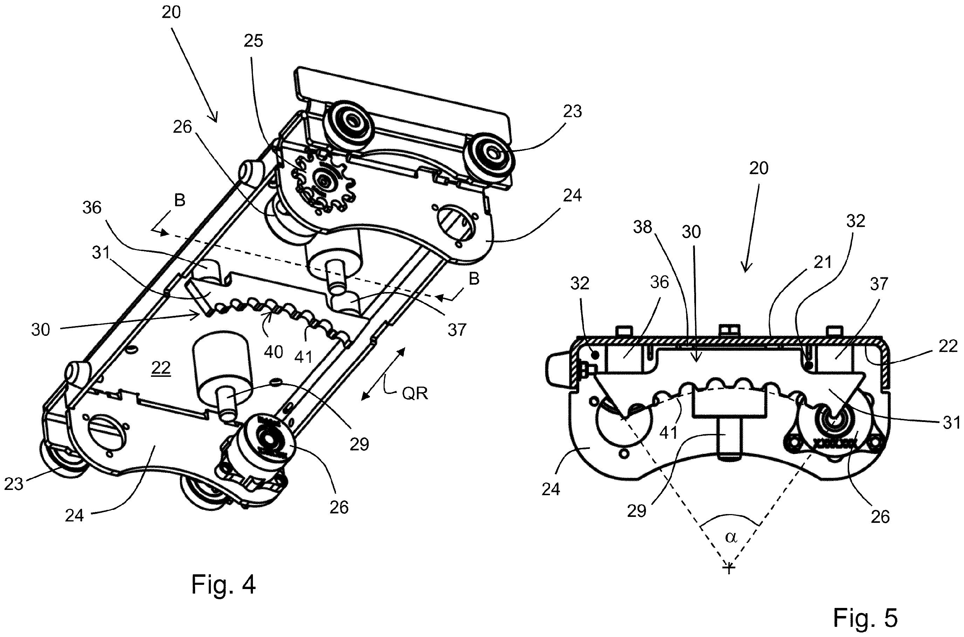

In den Umkehrabschnitten 6 sind in jedem Seitenabschnitt 17 zudem Umlenkelemente 7 in Form von Kettenrädern angeordnet, die auf einer gemeinsamen Welle 10 befestigt sind, welche eine Drehachse 16 definiert. Die Welle 10 wird angetrieben von einem Motor 8 und einem zwischengeschalteten Getriebe 11. Endlose Zugelemente 9 in Form von vorliegend dreizügigen Endlosketten laufen somit in jedem Seitenabschnitt 17 und nehmen Paletten 20 mit, die endlos im Umlaufförderer 1 umlaufen. Wie der Fig. 4 zu entnehmen ist, weisen die Paletten 20 hierzu Zahnräder 25 auf, die an Seitenwangen 24 im Bereich der beiden Querseiten jeder Palette 20 gelagert sind. Die Zahnräder 25 sind mit jeweils einer Hysteresekupplung 26 gekoppelt, die auf der anderen Seite jeder Seitenwange 24 vorgesehen sind. Diese Hysteresekupplungen sind in der WO 2004/000698 genauer A1 beschrieben. Wenn keine außergewöhnliche Kraftbelastung auf die Zahnräder 25 ausgeübt wird, rotieren die Zahnräder nicht in den Zugelementen 9, sondern sorgen für den Vortrieb der Palette 20. Tritt ein Hindernis auf, beispielsweise eine ruhende Palette 20, beginnen die Zahnräder 25 zu rotieren, so dass die Palette 20 nicht weiterbewegt wird. Anstelle von Hysteresekupplungen 26 können selbstverständlich auch andere, herkömmliche Kupplungen, beispielsweise Reibkupplungen, eingesetzt werden.

Für einen leichtgängigen Lauf der Paletten 20 in den Laufschienen 14, 15 sowie der Kulisse 18 weisen sie an ihrer Unterseite 22 vier Eckbereichen jeweils eine Rolle 23 auf (s. z.B. Fig. 4).

Die Erfindung befasst sich mit der Umlenkung der Paletten 20 in den Umkehrabschnitten mittels eines Form- oder Reibschlusses zwischen zwei Form- oder Reibschlusselementen, wobei ein erstes solches Element an der Unterseite 22 der Paletten 20 und ein zweites solches Element in mindestens einem, vorzugsweise in beiden Umkehrabschnitten 6 vorgesehen ist.

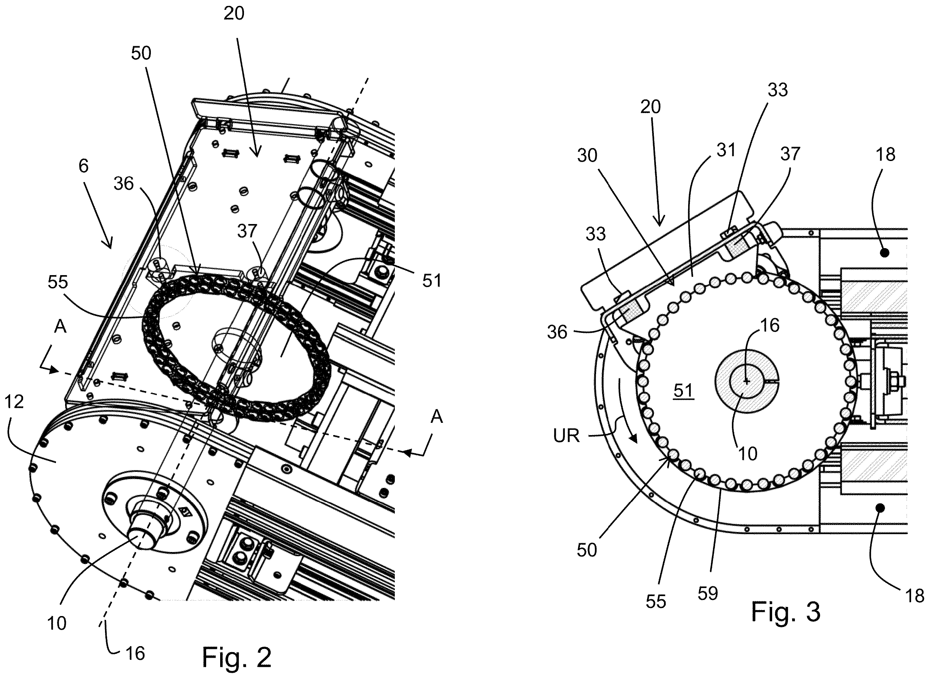

In den Fig. 2-5 ist eine erste Ausführungsform eines ersten Form- oder Reibschlusselements 30 dargestellt. Dieses ist mittig an der Unterseite 22 der Palette 20 vorgesehen und umfasst ein starres Bauteil 31, welches länglich ausgebildet ist und sich in Umlaufrichtung UR (s. Fig. 3) der Palette 20 erstreckt. Das starre Bauteil 31 weist ein Zahnsegment 40 mit vorliegend neun Zähnen 41 auf, die eine konkave Hüllkurve 39 mit konstantem Radius bilden. Anstelle von neun Zähnen können auch Zahnsegmente 40 mit einer anderen Anzahl von Zähnen 41 verwendet werden, beispielsweise Zahnsegmente 40 mit drei, sechs, acht oder zehn Zähnen 41. Die vorliegend neun Zähne 41 überstreichen hierbei einen Winkelbereich α von ca. 70°. Die Verbindung zur Unterseite 22 der Palette 20 erfolgt über zwei zylinderförmige elastische Pufferbauteile 36, 37, wobei das Pufferbauteil 36 an der vorderen, in Umlaufrichtung UR weisenden Seite und das Pufferbauteil 37 an der hinteren, entgegen die Umlaufrichtung UR weisenden Seite der Palette 20 angeordnet ist. Beide Pufferbauteile 36, 37, die mit Befestigungsmitteln 33 wie beispielsweise Schrauben, am Trage- bzw. Bodenblech 21 befestigt sind, sind in zur Unterseite 22 der Palette 20 gerichteten Vertiefungen 32 des starren Bauteils 31 angeordnet, wobei die Pufferbauteile 36, 37 mittels Gewindezapfen (nicht dargestellt) an dem starren Bauteil 31 befestigt sind. Die Befestigung des ersten Form- oder Reibschlusselements 30 an der Palette 30 ist dergestalt, dass zwischen dem starren Bauteil 31 und der Unterseite 22 der Palette 20 ein Spalt 38 vorhanden ist, so dass bei Druck in Richtung der Unterseite 22 der Palette 20 das starre Bauteil 31 wegen der Elastizität der Pufferbauteile 36, 37 nach oben ausweichen kann.

Die Pufferbauteile 36, 37 bestehen beispielsweise aus einem Kautschuk, vorliegend aus einem Polyester-Urethan-Kautschuk. Ein solcher Kautschuk wird beispielsweise unter dem Namen Vulkollan^{®} vermarktet. Wesentlich ist hierbei, dass das Elastizitätsmodul der Pufferbauteile 36, 37 wesentlich geringer ist als das des starren Körpers 31.

In den Fig. 2 und 3 ist erkennbar, wie das erste Form- oder Reibschlusselement 30 mit einem zweiten Form- oder Reibschlusselement 50 in einem Umkehrabschnitt 6 im Formschluss ist. Das zweite Form- und Reibschlusselement 50 umfasst gemäß dieser ersten Ausführungsform ein Zahnrad 51, das auf der Welle 10 mittig zwischen den beiden Umlenkelementen 7 angeordnet ist und synchron mit diesen angetrieben wird. Auf das Zahnrad 51 ist eine Kette 55 gespannt, die bevorzugt kein oder kaum Spiel hat. Eine solche Kette 55 kann beispielsweise eine herkömmliche Fahrradkette sein. Die Oberseiten der Kettenglieder der Kette 55 formen eine konvexe Hüllkurve 59.

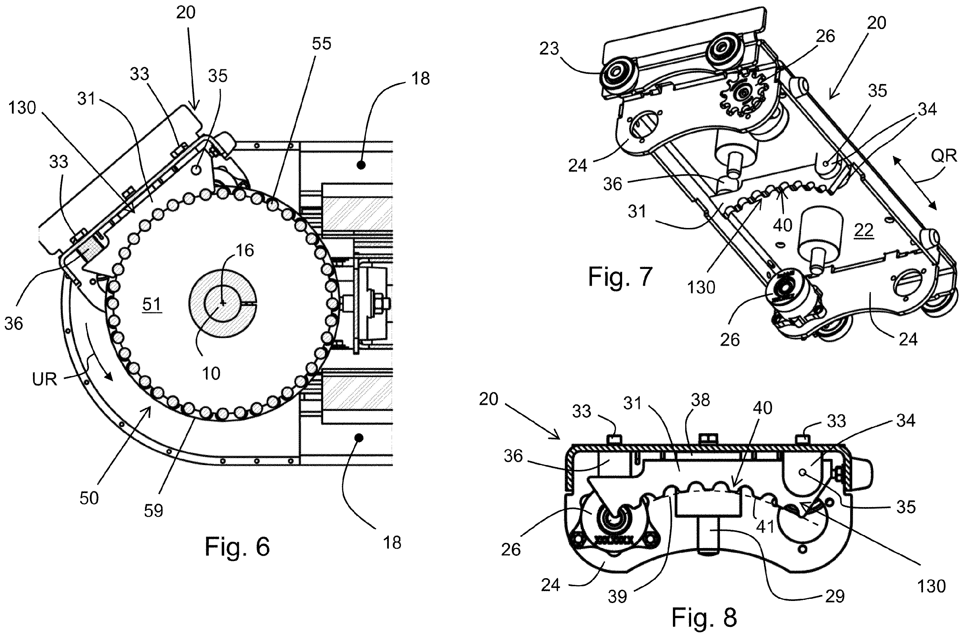

Beim Einfahren einer Palette 20 - beispielsweise vom Obertrum 2 her - in einen Umkehrabschnitt 6 kann der vorderste Zahn 41 des Zahnsegments 40 des ersten Form- oder Reibschlusselements 30 entweder direkt in einen Zwischenraum zwischen zwei Kettenglieder gelangen oder mit einem Kettenglied der Kette 55 kollidieren. Die dadurch erzeugte Kraft auf das starre Bauteil 31 wird insbesondere durch das Pufferbauteil 36 abgefangen und damit eine Beschädigung der beteiligten Bauteile vermieden. Bei einer solchen Kollision rutscht die Palette 20 dann um ein kurzes Stück vor- oder rückwärts, bis das Zahnsegment 40 in einen Formschluss mit dem Zahnrad 51 gerät. Die Zähne 41 des Zahnsegments 40 berühren während der gesamten Fahrt der Palette 20 im Umkehrabschnitt 6 bevorzugt nicht die Zähne des Zahnrads 51. Der Formschluss wird also zwischen den Zähnen 41 und der Kette 55 hergestellt. Dies gilt im Übrigen bevorzugt auch für die Ausführungsformen der weiter unten vorgestellten Ausführungsformen der Fig. 6-8 und 9-11. Die Zähne des ersten und des zweiten Form- oder Reibschlusselements sind hierzu bevorzugt abgeflacht.

Der Gegendruck, um das erste Form- oder Reibschlusselement 30 gegen das zweite Form- oder Reibschlusselement 50 zu drücken und gedrückt zu halten, wird vorliegend von der Kulisse 18 ausgeübt, welche eine Zwangsführung für die Rollen 23 der Palette darstellen. Hierdurch wird die Palette 20 in einer derartigen Bahn gehalten, dass sich der oben genannte Formschluss einstellt (wie auch der weiter unten beschriebene Reibschluss).

Bei dem gezeigten Formschluss (wie auch bei dem zweiten und dritten Ausführungsbeispiel, s.u.) ist die Berührungsstrecke in Umlaufrichtung UR größer als auf als in Querrichtung QR (s. Fig. 4) hierzu. Die wirksame Kontaktlänge in Umfangrichtung UR gesehen ist also größer als die Kontaktbreite in Querrichtung QR.

Auch wenn schon beim Hineinfahren der Palette 20 in den Umkehrabschnitt 6 ein Formschluss des vordersten Zahns 41 mit Zahnrad 50 und Kette 55 gebildet wird (also ohne Kollision mit Kettengliedern der Kette 55), wird das starre Bauteil 31 nach oben ausgelenkt, bis der erste Zahn 41 den Scheitelpunkt überquert hat. Beim weiteren Vorfahren der Palette umfasst der Formschluss dann mehr und mehr ineinander greifende Zähne. Es resultiert dann die in den Fig. 2 und Fig. 3 gezeigte Situation, wobei in der Fig. 2 der Deutlichkeit halber das Boden- bzw. Trageblech 21 der Palette 20 transparent dargestellt ist.

Angemerkt sei noch, dass in Fig. 2 zu erkennen ist, dass auf der dem Motor 8 abgewandten Seite des Umkehrabschnitts 6 eine Abdeckung 12 vor dem Umlenkelement 7 angebracht ist. Außerdem ist beispielsweise der Fig. 4 zu entnehmen, dass an der Unterseite 22 der Palette 20 zwei stummelförmige Anschlagzapfen 29 zu beiden Seiten des ersten Form- oder Reibschlusselements 50 angeordnet sind, welche beim Gegenlaufen gegen einen aus dem Obertrum 2 herausfahrbaren Stopper (nicht dargestellt) die Palette 20 aufhalten, wobei dann die beiden Zahnräder 25 sich bei weiterlaufenden Zugelementen 9 beginnen zu drehen.

In den Fig. 6-8 ist ein zweites Ausführungsbeispiel eines ersten Form- oder Reibschlusselements 130 dargestellt, während das zweite Form- oder Reibschlusselement 50 identisch ist zu demjenigen des ersten Ausführungsbeispiels ist. Die Schnitte in den Schnittansichten der Figuren 6 und 8 entsprechen denjenigen des ersten Ausführungsbeispiels. Das erste Form- oder Reibschlusselement 150 weist auch hier ein starres Bauteil 131 auf, das - wie bei der ersten Ausführungsform - mit der Unterseite 22 der Palette 20 über ein vorderes elastisches Pufferbauteil 36 verbunden ist. Anders bei der zweiten Ausführungsform ist die hintere Befestigung des starren Bauteils 131. Vorliegend ist hier ein doppelwandiger Lagerbock 34 vorgesehen, an den das starre Bauteil 131 schwenkbar um eine horizontale Drehachse 35 angelenkt ist. Um diese Drehachse ist das starre Bauteil 131 zur Unterseite 22 der Palette auslenkbar, wenn der vorderste Zahn 41 des Zahnsegments 40 auf ein Hindernis - d.h. das Zahnrad 51 mit aufgespannter Kette 55 - trifft. Der Mechanismus zur Herstellung des Formschlusses zwischen den beiden Form- oder Reibschlusselementen 130, 50 ist ansonsten der gleiche wie beim ersten Ausführungsbeispiel.

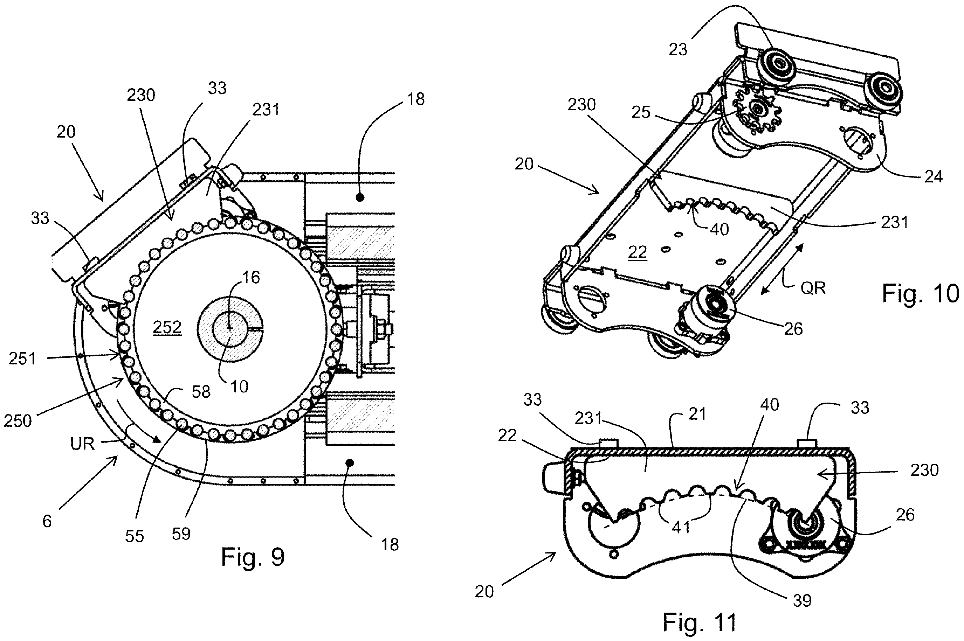

In den Fig. 9-11 ist ein drittes, vorliegend nicht beanspruchtes Ausführungsbeispiel eines ersten und zweiten Form- oder Reibschlusselements 230, 250 dargestellt. Bei dieser Ausführungsform weist das erste Form- oder Reibschlusselement 230 keine elastischen Pufferbauteile auf; vielmehr umfasst es lediglich ein starres Bauteil 231, dass an der Unterseite 22 der Palette 20 befestigt, beispielsweise angeschweißt, ist. Das starre Bauteil 231 weist ein sich in Umlaufrichtung UR erstreckendes, von der Unterseite 22 der Palette 20 weg gerichtetes Zahnsegment 40 mit auch hier neun Zähnen 41 auf, deren Zahnkuppen eine Hüllkurve 39 definieren (s. Fig. 11). Der von dem Zahnsegment 40 überstrichene Winkelbereich α beträgt hier ebenfalls ca. 65°.

Das zweite Form- oder Reibschlusselement 250 gemäß dem dritten Ausführungsbeispiel ist vorliegend kein Zahnrad aus einem Vollmaterial, sondern weist einen inneren starren Körper 252 in Form einer Scheibe mit glattem Rand oder eines Zahnkranzes, vorzugsweise aus Stahl oder Aluminium, auf. Auf den Umfangsrand des starren Körper 252 ist ein elastisches Pufferbauteil 58 in Form eines vollständig umlaufenden Zahnkranzes aufgebracht, insbesondere bestehend aus einem Polyester-Urethan-Kautschuk. Der starre Körper 252 sowie das zahnkranzförmige Pufferbauteil 58 bilden zusammen ein Zahnrad 251. Auf das zahnkranzförmige Pufferbauteil 58 ist hierbei wiederum eine Kette 55 gespannt.

Beim Einfahren der Palette 20 in einen Umkehrabschnitt 6 wird ein Zahn des zahnförmigen Pufferbauteils 58 von dem vordersten Zahn 41 des starren Bauteils 231 eingedrückt; gleichzeitig wird eine Gegenkraft vom Pufferbauteil 58 auf die Palette 20 ausgeübt. Durch das elastische Nachgeben des Pufferbauteils 58 und durch die Führung der Palette 20 in den Kulissen 18 des jeweiligen Umkehrabschnitts 6 wird die Palette 20 durch den Formschluss der beiden Form- oder Reibschlusselemente 230, 250 sicher durch den Umkehrabschnitt geführt.

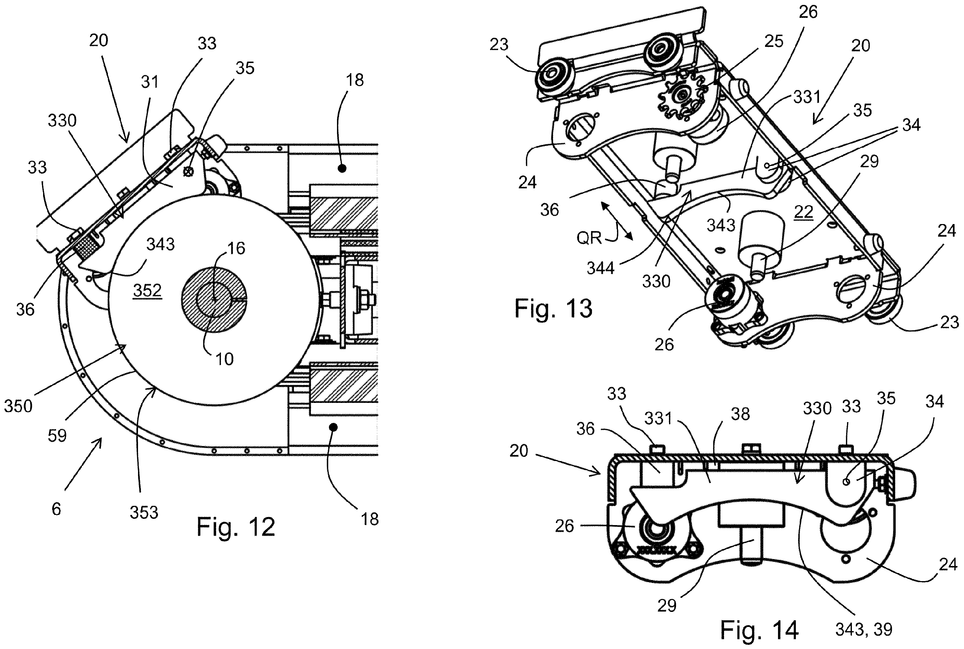

In den Fig. 12-14 ist eine vierte Ausführungsform dargestellt, bei der - im Gegensatz zu den vorangehenden Ausführungsbeispielen - ein Reibschluss zwischen dem ersten und zweiten Form- oder Reibschlusselement 330, 350 hergestellt wird. Hierzu ist das erste Form- oder Reibschlusselement 330 vergleichbar zum ersten Form- oder Reibschlusselement 130 ausgebildet (elastisches Pufferbauteil 36, Auslenkung um Drehachse 35), mit dem Unterschied, dass anstelle eines Zahnsegments 40 am starren Bauteil 331 eine gleichmäßige konkave Reibschlussfläche 343 vorhanden ist, welche in der Seitenansicht wiederum die Form einer Hüllkurve 39 einnimmt. Der von dem Zahnsegment 40 überstrichene Winkelbereich α beträgt hier ebenfalls ca. 65°. Das zweite Form- oder Reibschlusselement 350 weist einen starren Körper 352 mit einer zur konkaven Reibschlussfläche 343 korrespondierenden konvexen Reibschlussfläche 353 auf.

Beim Auflaufen der konkaven Reibschlussfläche 343 auf die konvexe Reibschlussfläche 353 wird die Vorderkante 344 des starren Bauteils 331 und damit das Pufferbauteil 36 belastet und eingedrückt, bis ein vollflächiger Reibschluss zwischen den beiden Reibschlussflächen 343, 353 erzielt ist. Auch hier wird der Gegendruck durch die Kulissen 18 in den Umkehrabschnitten 6 definiert, welche die Rollen 23 der Palette 20 führen. Durch die Kulissen 18 wird eine inwärts gerichtete Kraft auf die Palette 20 ausgeübt, während der Reibschluss die Palette 20 nach außen drückt, so dass insgesamt eine sichere Führung der Palette 20 im Umkehrabschnitt resultiert.

Generell ermöglicht es die Erfindung, aufgrund des durch das mindestens eine elastische Pufferbauteil vermittelten Ausweichens und ohne dass - vorteilhafterweise durch Einwirken der Kulissen 18 - hierbei der Kontakt zwischen den beiden Form- oder Reibschlusselementen verloren geht, dass die beiden Form- oder Reibschlusselemente sich zerstörungsfrei aneinander anlegen.

Zwar wird bevorzugt Kautschuk als Material für die elastischen Pufferbauteile verwendet. Es ist aber auch möglich, dass in bestimmten Ausführungsformen die elastischen Pufferbauteile als Federn o.ä. ausgebildet sind. Wegen der Einfachheit und Robustheit ist allerdings der Einsatz von Kautschuk bevorzugt.

Die Erfindung wurde anhand von Ausführungsbeispielen näher erläutert. Merkmale der unterschiedlichen Ausführungsformen können aber, soweit möglich, miteinander kombiniert werden, um neue, zur Erfindung zählende Ausführungsformen zu erhalten. Außerdem umfasst die Erfindung auch Abwandlungen, die innerhalb der Ansprüche liegen.

### Bezugszeichenliste

- 1: Umlaufförderer
- 2: Obertrum
- 3: Untertrum
- 4: obere Förderbahn
- 5: untere Förderbahn
- 6: Umkehrabschnitt
- 7: Umlenkelement
- 8: Motor
- 9: Zugelement
- 10: Welle
- 11: Getriebe
- 12: Abdeckung
- 13: Gestell
- 14: Laufschiene
- 15: Laufschiene
- 16: Drehachse
- 17: Seitenabschnitt
- 18: Kulisse
- 20: Palette
- 21: Bodenblech
- 22: Unterseite der Palette
- 23: Rollen
- 24: Seitenwange
- 25: Zahnrad
- 26: Hysteresekupplung
- 29: Anschlagzapfen
- 30: erstes Form- oder Reibschlusselement
- 31: starres Bauteil
- 32: Vertiefung
- 33: Befestigungsmittel
- 34: Lagerbock
- 35: Drehachse
- 36: Pufferbauteil
- 37: Pufferbauteil
- 38: Spalt
- 39: konkave Hüllkurve
- 40: Zahnsegment
- 41: Zähne
- 50: zweites Form- oder Reibschlusselement
- 51: Zahnrad
- 55: Kette
- 58: elastisches Pufferbauteil (Zahnkranz)
- 59: konvexe Hüllkurve
- 130: erstes Form- oder Reibschlusselement
- 131: starres Bauteil
- 230: erstes Form- oder Reibschlusselement
- 231: starres Bauteil
- 250: zweites Form- oder Reibschlusselement
- 251: Zahnrad
- 252: starrer Körper
- 330: erstes Form- oder Reibschlusselement
- 331: starres Bauteil
- 343: konkave Reibschlussfläche
- 344: Vorderkante
- 350: zweites Form- oder Reibschlusselement
- 352: starrer Körper
- 353: konvexe Reibschlussfläche

## Patentansprüche

1. Geschlossener Umlaufförderer (1) für Paletten (20),
- mit einem Obertrum (2) und einem Untertrum (3), die eine obere und eine untere Förderbahn (4, 5) bilden,
- mit diese beiden Trums (2, 3) miteinander verbindenden Umkehrabschnitten (6), in denen Umlenkelemente (7) angeordnet sind, von denen mindestens eines mit einem Motor (8) verbunden und von diesem antreibbar ist,
- mit endlos im Ober- und Untertrum (2, 3) und in den Umkehrabschnitten (6) umlaufenden Zugelementen (9), welche in den Umkehrabschnitten (6) mit den Umlenkelementen (7) im Eingriff stehen und von diesen angetrieben werden,
- mit mindestens einer umlaufenden Palette (20), die von den Zugelementen (9) mitgenommen wird und mit diesen umläuft,
wobei an der Unterseite (22) der Palette (20) mindestens ein erstes Form- oder Reibschlusselement (30; 130; 330) fixiert ist, welches in mindestens einem der Umkehrabschnitte (6) mit mindestens einem dort angeordneten, um eine feststehende Drehachse (16) rotierenden zweiten Form- oder Reibschlusselement (50; 350) in einen form- oder reibschlüssigen Eingriff kommt, wobei das erste und/oder das zweite Form-oder Reibschlusselement (30; 130; 330; 50; 350) mindestens ein elastisches Pufferbauteil (36; 36, 37; 58) aufweist, das nachgibt, wenn das erste und zweite Form- oder Reibschlusselement (30; 130; 330; 50; 350) aufeinander treffen,
**dadurch gekennzeichnet, dass** mindestens ein besagtes elastisches Pufferbauteil (36; 36, 37) zwischen der Unterseite (22) der Palette (20) und einem starren Bauteil (31) des ersten Form- oder Reibschlusselements (30; 130; 330) angeordnet ist, wobei das starre Bauteil (31), aber nicht das mindestens eine Pufferbauteil (36; 36, 37), in dem mindestens einen Umkehrabschnitt (6) in direktem Kontakt mit dem zweiten Form-oder Reibschlusselement (50; 350) ist, wobei
- entweder ein erstes besagtes elastisches Pufferbauteil (36) an der in Umlaufrichtung (UR) gesehen Vorderseite der Palette (20) und ein zweites besagtes elastisches Pufferbauteil (37) an der in Umlaufrichtung (UR) gesehen Rückseite der Palette (20) vorgesehen ist,
- oder ein besagtes elastisches Pufferbauteil (36) an der in Umlaufrichtung (UR) gesehen Vorderseite der Palette (20) vorgesehen ist, und dass das erste Form- oder Reibschlusselement (30; 130; 330) beim Kontaktieren mit dem zweiten Form- oder Reibschlusselement um eine in Bezug auf die Palette (20) fixe Drehachse (35) ausgelenkt wird, die an der in Umlaufrichtung gesehen Rückseite der Palette (20) vorgesehen ist.

2. Umlaufförderer nach Anspruch 1, **dadurch gekennzeichnet, dass** das zweite Form- oder Reibschlusselement (50; 350) scheiben- oder radförmig ausgebildet ist und dass das erste Form- oder Reibschlusselement (30; 130; 330) sich in dem mindestens einen Umkehrabschnitt (6) mit dem zweiten Form- oder Reibschlusselement (50; 350) über einen Winkelbereich (α) von mehr als 20°, vorzugsweise von mehr als 35°, besonders bevorzugt von mehr als 50°, und mit Vorteil mehr als 60°, beispielsweise 70°, im form- oder reibschlüssigen Eingriff befindet.

3. Umlaufförderer nach Anspruch 1 oder 2, **dadurch gekennzeichnet, dass** das erste Form- oder Reibschlusselement (30; 130; 330) in dem mindestens einen Umkehrabschnitt (6) mit dem zweiten Form- oder Reibschlusselement (50; 350) in Umlaufrichtung (UR) über eine größere Strecke in Berührung ist als in der entsprechenden Querrichtung (QR).

4. Umlaufförderer nach mindestens einem der vorhergehenden Ansprüche, **dadurch gekennzeichnet, dass** das erste Form- oder Reibschlusselement (30; 130; 330) eine zum zweiten Form- oder Reibschlusselement (50; 350) gewandte, sich in Umlaufrichtung (UR) der Palette (20) erstreckende, konkave Hüllkurve (39) aufweist, und dass das zweite Form- oder Reibschlusselement (50; 350) eine zum ersten Form- oder Reibschlusselement (30; 130; 330) gewandete konvexe Hüllkurve (59) aufweist, vorzugsweise eine zur konkaven Hüllkurve (39) des ersten Form- oder Reibschlusselements (30; 130; 330) korrespondierende Hüllkurve (59), wobei die beiden Form- oder Reibschlusselemente (30; 130; 330; 50; 350) in dem mindestens einen Umkehrabschnitt (6) an den beiden Hüllkurven (39) in form- oder reibschlüssigen Eingriff kommen.

5. Umlaufförderer nach mindestens einem der vorhergehenden Ansprüche, **dadurch gekennzeichnet, dass** das erste Form- oder Reibschlusselement (30; 130; 330) mindestens ein Zahnsegment (40) mit drei oder mehr Zähnen (41), beispielsweise fünf oder sieben oder neun oder noch mehr Zähnen (41), wie z.B. zehn Zähnen (41), umfasst, wobei sich die Zähne (41) in dem mindestens einen Umkehrabschnitt (6) an das zweite Form- oder Reibschlusselement (50; 350) anlegen, vorzugsweise formschlüssig.

6. Umlaufförderer nach mindestens einem der Ansprüche 1 bis 4, **dadurch gekennzeichnet, dass** das erste Form- oder Reibschlusselement (330) eine im Wesentlichen gleichmäßig konkave Reibschlussfläche (342) umfasst, welche sich in dem mindestens einen Umkehrabschnitt (6) reibschlüssig an das zweite Form- oder Reibschlusselement (350) anlegt.

7. Umlaufförderer nach mindestens einem der vorhergehenden Ansprüche, **dadurch gekennzeichnet, dass** das zweite Form- oder Reibschlusselement (50; 350) ein Zahnrad (51; 251) und eine endlose Kette (55) umfasst, welche auf das besagte Zahnrad (51; 251) gespannt ist.

8. Umlaufförderer nach Anspruch 7, **dadurch gekennzeichnet, dass** Zähne (41) des ersten Form- oder Reibschlusselements (30; 130) mit den Zähnen des Zahnrads (51) während des Formschlusses im Umkehrabschnitt (6) keinen Kontakt haben, sondern nur mit den Kettengliedern der besagten Kette (55).

9. Umlaufförderer nach mindestens einem der vorhergehenden Ansprüche, **dadurch gekennzeichnet, dass** das zweite Form- oder Reibschlusselement (250) ein Zahnrad (251) umfasst, wobei mindestens ein weiteres elastisches Pufferbauteil (58) an dessen Außenumfang fest angeordnet und gezahnt ausgebildet ist, vorzugsweise vollständig umlaufend.

10. Umlaufförderer nach Anspruch 9, **dadurch gekennzeichnet, dass** das zweite Form- oder Reibschlusselement (250) ein Zahnrad (251) umfasst, das einen scheibenförmigen starren Körper (252), vorzugsweise aus Metall, umfasst, auf dessen Umfangsrand das mindestens eine weitere elastische Pufferbauteil (58) in Form eines Zahnkranzes aufgebracht ist, welches bevorzugt aus einem Polyester-Urethan-Kautschuk besteht.

11. Umlaufförderer nach mindestens einem der vorhergehenden Ansprüche, **dadurch gekennzeichnet, dass** das mindestens eine elastische Pufferbauteil (36; 36, 37) nach Anspruch 1 und/oder das mindestens eine weitere elastische Pufferbauteil (58) nach Anspruch 9 oder 10 aus einem elastischen Kunststoff, beispielsweise aus Kautschuk, besteht.

12. Umlaufförderer nach mindestens einem der Ansprüche 1 bis 10, **dadurch gekennzeichnet, dass** das mindestens eine elastische Pufferbauteil nach Anspruch 1 als Feder ausgebildet ist.

13. Umlaufförderer nach mindestens einem der vorhergehenden Ansprüche, **dadurch gekennzeichnet, dass** Kulissen (18) in dem mindestens einen Umkehrabschnitt (6) vorgesehen sind, in der an der Palette (20) angeordnete Führungselemente, insbesondere Rollen (23), derart geführt werden, dass ein Gegendruck des ersten Form- oder Reibschlusselements (30; 130; 330) gegen das zweite Form- oder Reibschlusselement (50; 350) zum Erzeugen und Erhalten des Form- oder Reibschlusses entsteht.

14. Umlaufförderer nach mindestens einem der vorhergehenden Ansprüche, **dadurch gekennzeichnet, dass** das zweite Form- oder Reibschlusselement (50; 350) synchron mit den Umlenkelementen (7) rotiert, vorzugsweise ebenfalls angetrieben vom besagten Motor (8).

15. Umlaufförderer nach mindestens einem der vorhergehenden Ansprüche, **dadurch gekennzeichnet, dass** das zweite Form- oder Reibschlusselement (50; 350) zwischen den Umlenkelementen (7) eines Umkehrabschnitts (6) angeordnet ist, vorteilhafterweise mittig zwischen diesen Umlenkelementen (7).

## Claims

1. Closed continuous conveyor (1) for pallets (20),
- with an upper run (2) and a lower run (3), which form an upper and a lower conveyor track (4, 5),
- with reversal sections (6) connecting such two runs (2, 3) to one another, in which reversal sections (6) deflecting elements (7) are arranged, of which at least one is connected to an engine (8) and can be driven by it,
- with tension elements (9) rotating endlessly in the upper and lower runs (2, 3) and in the reversal sections (6), which are in engagement with the deflecting elements (7) in the reversal sections (6) and are driven by them,
- with at least one rotating pallet (20), which is carried along by the tension elements (9) and rotates with these,
wherein at least one first form closure element or frictional closure element (30; 130; 330) is fixed to the underside (22) of the pallet (20), which, in at least one of the reversal sections (6), comes into a form-locking or frictional-locking engagement with at least one second form closure element or frictional closure element (50; 350) that is arranged there and rotates around a fixed axis of rotation (16), wherein the first and/or the second form closure element or frictional closure element (30; 130; 330; 50; 350) features at least one elastic buffer component (36; 36, 37; 58), which yields if the first and second form closure elements or frictional closure elements (30; 130; 330; 50; 350) hit each other,
**characterized in that** at least one said elastic buffer component (36; 36, 37) is arranged between the underside (22) of the pallet (20) and a rigid component (31) of the first form closure element or frictional closure element (30; 130; 330), wherein the rigid component (31), but not the at least one buffer component (36; 36, 37), in the at least one reversal section (6) is in direct contact with the second form closure element or frictional closure element (50; 350), wherein
- either a first said elastic buffer component (36) is provided on the front side of the pallet (20) viewed in the circulating direction (UR) and a second said elastic buffer component (37) is provided on the rear side of the pallet (20) viewed in the circulating direction (UR),
- or a said elastic buffer component (36) is provided on the front side of the pallet (20) viewed in the circulating direction (UR), and that, upon contact with the second form closure element or frictional closure element, the first form closure element or frictional closure element (30; 130; 330) is deflected about an axis of rotation (35) fixed with reference to the pallet (20), which axis of rotation (35) is provided on the rear side of the pallet (20) viewed in the circulating direction.

2. Continuous conveyor according to claim 1, **characterized in that** the second form closure element or frictional closure element (50; 350) is formed in the shape of a disk or a wheel, and that the first form closure element or frictional closure element (30; 130; 330) is in form-locking or frictional-locking engagement in the at least one reversal section (6) with the second form closure element or frictional closure element (50; 350) over an angular range (α) of more than 20°, preferably of more than 35°, more preferably of more than 50°, and advantageously of more than 60°, for example 70°.

3. Continuous conveyor according to claim 1 or 2, **characterized in that** the first form closure element or frictional closure element (30; 130; 330) in the least one reversal section (6) is in contact with the second form closure element or frictional closure element (50; 350) in the circulating direction (UR) over a longer distance than in the corresponding transverse direction (QR).

4. Continuous conveyor according to at least one of the preceding claims, **characterized in that** the first form closure element or frictional closure element (30; 130; 330) features a concave envelope curve (39) that is turned towards the second form closure element or frictional closure element (50; 350) and extends in the circulating direction (UR) of the pallet (20), and that the second form closure element or frictional closure element (50; 350) features a convex envelope curve (59) that is turned towards the first form closure element or frictional closure element (30; 130; 330), preferably an envelope curve (59) matching a concave envelope curve (39) of the first form closure element or frictional closure element (30; 130; 330), wherein the two form closure elements or frictional closure elements (30; 130; 50; 350) come into a form-locking or frictional-locking engagement in the at least one reversal section (6) at the two envelope curves (39).

5. Continuous conveyor according to at least one of the preceding claims, **characterized in that** the first form closure element or frictional closure element (30; 130; 330) comprises at least one toothed segment (40) with three or more gear teeth (41), for example five or seven or nine or even more gear teeth (41) for example, ten gear teeth (41), wherein the gear teeth (41) bear, preferably with form closure, against the second form closure element or frictional closure element (50; 350) in the at least one reversal section (6).

6. Continuous conveyor according to at least one of the claims 1 to 4, **characterized in that** the first form closure element or frictional closure element (330) comprises an essentially uniformly concave frictional closure surface (342), which bears in the at least one reversal section (6), with frictional closure, against the second form closure element or frictional closure element (350).

7. Continuous conveyor according to at least one of the preceding claims, **characterized in that** the second form closure element or frictional closure element (50; 350) comprises a gear wheel (51; 251) and an endless chain (55), which is tensioned on said gear wheel (51; 251).

8. Continuous conveyor according to claim 7, **characterized in that**, during the form closure in the reversal section (6), the teeth (41) of the first form closure element or frictional closure element (30; 130) have no contact with the gear teeth of the gear wheel (51), but only have contact with the chain links of said chain (55).

9. Continuous conveyor according to at least one of the preceding claims, **characterized in that** the second form closure element or friction closure element (250) comprises a gearwheel (251), wherein at least one further elastic buffer component (58) being fixedly arranged on the outer circumference thereof and being tooth-shaped, preferably completely circumferentially.

10. Continuous conveyor according to claim 9, **characterized in that** the second form closure element or friction closure element (250) comprises a gear wheel (251), comprising a disk-shaped rigid body (252), preferably made of metal, on the circumferential edge of which the at least one further elastic buffer component (58) is applied in the form of a gear rim, the gear rim consisting preferably of a polyester-urethane rubber.

11. Continuous conveyor according to at least one of the preceding claims, **characterized in that** the at least one elastic buffer component (36; 36, 37) according to claim 1 and/or the at least one further elastic buffer component (58) according to claim 9 or 10 consists of an elastic plastic, for example rubber.

12. Continuous conveyor according to at least one of the claims 1 to 10, **characterized in that** the at least one elastic buffer component according to claim 1 is designed as a spring.

13. Continuous conveyor according to at least one of the preceding claims, **characterized in that** slotted links (18) are provided in the at least one reversal section (6), in which slotted links (18) guide elements, in particular rollers (23), arranged on the pallet (20) are guided in such a manner that a counter-pressure of the first form closure element or frictional closure element (30; 130; 330) against the second form closure element or frictional closure element (50; 350) for generating and maintaining the form closure or frictional closure arises.

14. Continuous conveyor according to at least one of the preceding claims, **characterized in that** the second form closure element or frictional closure element (50; 350) rotates synchronously with the deflecting elements (7), preferably being driven by said engine (8), too.

15. Continuous conveyor according to at least one of the preceding claims, **characterized in that** the second form closure element or frictional closure element (50; 350) is arranged between the deflecting elements (7) of a reversal section (6), advantageously centrally between such deflecting elements (7).

## Revendications

1. Convoyeur sans fin (1) fermé pour palettes (20),
- avec un brin supérieur (2) et un brin inférieur (3) qui forment un chemin de convoyage (4, 5) supérieur et inférieur,
- avec des sections d'inversion de marche (6) reliant ces deux brins (2, 3) l'un à l'autre, dans lesquelles sont disposés des éléments de renvoi (7) dont au moins un est relié à un moteur (8) et peut être entraîné par celui-ci,
- avec des éléments de traction (9) tournant sans fin dans les brins supérieur et inférieur (2, 3) et dans les sections d'inversion de marche (6), qui sont en prise avec les éléments de renvoi (7) dans les sections d'inversion de marche (6) et sont entraînés par ceux-ci,
- avec au moins une palette circulante (20), qui est entraînée par les éléments de traction (9) et qui circule avec ceux-ci,
dans lequel au moins un premier élément de verrouillage (30 ; 130 ; 330) par clabotage mécanique ou par friction est fixé sur la face inférieure (22) de la palette (20), qui vient en prise par clabotage mécanique ou par friction dans au moins l'une des sections d'inversion de marche (6) avec au moins un second élément de verrouillage (50 ; 350) par clabotage mécanique ou par friction qui y est disposé et qui tourne autour d'un axe de rotation fixe (16), sachant que le premier et/ou le second élément de verrouillage (30 ; 130 ; 330 ; 50 ; 350) par clabotage mécanique ou par friction présente(nt) au moins un composant tampon élastique (36 ; 36, 37; 58) qui cède lorsque le premier et le second élément de verrouillage (30 ; 130 ; 330 ; 50 ; 350) par clabotage mécanique ou par friction se rencontrent,
**caractérisé en ce que** au moins dit un composant tampon élastique (36 ; 36, 37) est disposé entre la face inférieure (22) de la palette (20) et un composant rigide (31) du premier élément de verrouillage (30 ; 130 ; 330) par clabotage mécanique ou par friction, sachant que le composant rigide (31), mais pas le, au moins un, composant tampon (36 ; 36, 37), est en contact direct avec le deuxième élément de verrouillage (50 ; 350) par clabotage mécanique ou par friction dans la, au moins une, section d'inversion de marche (6), dans lequel
- soit un premier dit composant tampon élastique (36) est prévu sur le côté avant de la palette (20), vue dans la direction de circulation (UR), et un deuxième dit composant tampon élastique (37) est prévu sur le côté arrière de la palette (20), vue dans la direction de circulation (UR),
- soit un dit composant tampon élastique (36) est prévu sur le côté avant de la palette (20), vue dans la direction de circulation (UR), et **en ce que** le premier élément de verrouillage (30 ; 130 ; 330) par clabotage mécanique ou par friction, lorsqu'il entre en contact avec le deuxième élément de verrouillage par clabotage mécanique ou par friction, est dévié autour d'un axe de rotation (35) fixe par rapport à la palette (20), qui est prévu sur le côté arrière de la palette (20) vue dans la direction de circulation.

2. Convoyeur sans fin selon la revendication 1, **caractérisé en ce que** le second élément de verrouillage (50 ; 350) par clabotage mécanique ou par friction se présente sous la forme d'un disque ou d'une roue et **en ce que** le premier élément de verrouillage (30 ; 130 ; 330) par clabotage mécanique ou par friction vient en prise par clabotage mécanique ou par friction dans la, au moins une, section d'inversion de marche (6) avec le second élément de verrouillage (50 ; 350) par clabotage mécanique ou par friction dans un champ angulaire (α) de plus de 20°, de préférence de plus de 35°, de manière particulièrement préférée de plus de 50°, et avantageusement de plus de 60°, par exemple de 70°, en prise par engagement clabotage mécanique ou par friction.

3. Convoyeur sans fin selon la revendication 1 ou 2, **caractérisé en ce que** le premier élément de verrouillage (30 ; 130 ; 330) par clabotage mécanique ou par friction, dans la, au moins une, section d'inversion de marche (6), est en contact avec le second élément de verrouillage (50 ; 350) par clabotage mécanique ou par friction sur une plus grande distance dans le sens de rotation (UR) que dans le sens transversal (QR) correspondant.

4. Convoyeur sans fin selon au moins l'une des revendications précédentes, **caractérisé en ce que** le premier élément de verrouillage (30 ; 130 ; 330) par clabotage mécanique ou par friction présente une courbe enveloppe (39) concave qui est tournée vers le second élément de verrouillage (50 ; 350) par clabotage mécanique ou par friction et qui s'étend dans la direction de circulation (UR) de la palette (20), et **en ce que** le second élément de verrouillage (50 ; 350) par clabotage mécanique ou par friction présente une courbe enveloppe (59) convexe qui est tournée vers le premier élément de verrouillage (30 ; 130 ; 330) par clabotage mécanique ou par friction, de préférence une courbe enveloppe (59) correspondant à la courbe enveloppe (39) concave du premier élément de verrouillage (30 ; 130 ; 330) par clabotage mécanique ou par friction, dans lequel les deux éléments de verrouillage (30 ; 130 ; 330 ; 50 ; 350) par clabotage mécanique ou par friction entrent en prise par clabotage mécanique ou par friction par les deux courbes enveloppes (39) dans la, au moins une, section d'inversion de marche (6).

5. Convoyeur sans fin selon au moins l'une des revendications précédentes, **caractérisé en ce que** le premier élément de verrouillage (30 ; 130 ; 330) par clabotage mécanique ou par friction comprend au moins un segment denté (40) avec trois dents (41) ou plus, par exemple cinq ou sept ou neuf ou même plus de dents (41), comme, par exemple, dix dents (41), les dents (41) s'appliquant dans la, au moins une, section d'inversion de marche (6) sur le second élément de verrouillage (50 ; 350) par clabotage mécanique ou par friction, de préférence par clabotage mécanique.

6. Convoyeur sans fin selon au moins l'une des revendications 1 à 4, **caractérisé en ce que** le premier élément de verrouillage (330) par clabotage mécanique ou par friction comprend une surface de verrouillage par friction (342) sensiblement uniformément concave qui, dans la, au moins une, section d'inversion de marche (6), s'applique en friction contre le second élément de verrouillage (350) par clabotage mécanique ou par friction.

7. Convoyeur sans fin selon au moins l'une des revendications précédentes, **caractérisé en ce que** le second élément de verrouillage (50 ; 350) par clabotage mécanique ou par friction comprend une roue dentée (51 ; 251) et une chaîne sans fin (55) qui est tendue sur ladite roue dentée (51 ; 251).

8. Convoyeur sans fin selon la revendication 7, **caractérisé en ce que** des dents (41) du premier élément de verrouillage (30 ; 130) par clabotage mécanique ou par friction ne sont pas en contact avec les dents de la roue dentée (51) pendant le verrouillage par clabotage mécanique dans la section d'inversion de marche (6), mais seulement avec les maillons de ladite chaîne (55).

9. Convoyeur sans fin selon au moins l'une des revendications précédentes, **caractérisé en ce que** le deuxième élément de verrouillage (250) par clabotage mécanique ou par friction comprend une roue dentée (251), dans lequel au moins un autre composant tampon élastique (58) est disposé à demeure sur sa circonférence extérieure et se présente sous une forme dentée, de préférence de manière complètement circonférentielle.

10. Convoyeur sans fin selon la revendication 9, **caractérisé en ce que** le deuxième élément de verrouillage (250) par clabotage mécanique ou par friction comprend une roue dentée (251) qui comprend un corps (252) rigide en forme de disque, de préférence en métal, sur le bord circonférentiel duquel est appliqué le, au moins un, autre composant tampon élastique (58) sous la forme d'une couronne dentée, qui est de préférence composée d'un caoutchouc polyester-uréthane.

11. Convoyeur sans fin selon au moins l'une des revendications précédentes, **caractérisé en ce que** le, au moins un, composant tampon élastique (36 ; 36, 37 ) selon la revendication 1 et/ou le, au moins un, autre composant tampon élastique (58) selon la revendication 9 ou 10 se compose d'une matière plastique élastique, par exemple de caoutchouc.

12. Convoyeur sans fin selon au moins l'une des revendications 1 à 10, **caractérisé en ce que** le, au moins un, composant tampon élastique selon la revendication 1 est réalisé sous forme de ressort.

13. Convoyeur sans fin selon au moins l'une des revendications précédentes, **caractérisé en ce que** des coulisses (18) sont prévues dans la, au moins une, section d'inversion de marche (6), dans lesquels des éléments de guidage, en particulier des rouleaux (23), disposés sur la palette (20) sont guidés de sorte qu'une contre-pression du premier élément de verrouillage (30 ; 130 ; 330) par clabotage mécanique ou par friction contre le second élément de verrouillage (50 ; 350) par clabotage mécanique ou par friction soit générée pour produire et maintenir le verrouillage par clabotage mécanique ou par friction.

14. Convoyeur sans fin selon au moins l'une des revendications précédentes, **caractérisé en ce que** le second élément de verrouillage (50 ; 350) par clabotage mécanique ou par friction tourne de manière synchrone avec les éléments de renvoi (7), de préférence également entraîné par ledit moteur (8).

15. Convoyeur sans fin selon au moins l'une des revendications précédentes, **caractérisé en ce que** le second élément de verrouillage (50 ; 350) par clabotage mécanique ou par friction est disposé entre les éléments de renvoi (7) d'une section d'inversion de marche (6), avantageusement au centre entre ces éléments de renvoi (7).
